# EUROPEAN PATENT APPLICATION

(11) **EP 3 001 748 A1**
(43) Date of publication of application: **30.03.2016**
(21) Application number: 14800688.5
(22) Date of filing: 15.05.2014
(51) Int. Cl.: H04W 72/04, H04J 1/00, H04J 11/00, H04W 8/00, H04W 92/18

(54) **USER DEVICE, BASE STATION, WIRELESS RESOURCE SELECTION METHOD, AND WIRELESS RESOURCE NOTIFICATION METHOD**

(30) Priority: 20.05.2013 JP 2013106539
(71) Applicant: NTT DOCOMO, INC., Chiyoda-ku Tokyo 100-6150 (JP)
(72) Inventor: NAGATA, Satoshi, Tokyo 100-6150 (JP); HARADA, Hiroki, Tokyo 100-6150 (JP); TAKEDA, Kazuki, Tokyo 100-6150 (JP)
(74) Representative: Hoffmann Eitle
(86) International application number: PCT/JP2014/062976
(87) International publication number: WO 2014/188958

(57) **Abstract**

A user apparatus configured to select a discovery resource from a predetermined radio resource, and to transmit a discovery signal using the discovery resource, including: means that receives, from a plurality of base stations, radio resource information indicating a radio resource by which a discovery signal can be transmitted; means that detects a common region of radio resources by which a discovery signal can be transmitted between the plurality of base stations based on a plurality of pieces of radio resource information received from the plurality of base stations; and means that selects a discovery resource from a radio resource of the common region, and transmits a discovery signal by using the discovery resource.

## Description

### TECHNICAL FIELD

The present invention relates to terminal-to-terminal communication (D2D communication). More particularly, the present invention relates to a technique for assigning a radio resource for transmitting or detecting a discovery signal in the terminal-to-terminal communication.

### BACKGROUND ART

In a mobile communication system, it is common that a terminal (to be referred to as "user apparatus UE" hereinafter) and a base station eNB perform communication so that communication is performed between user apparatuses UE. However, in recent years, various techniques are considered for performing direct communication between user apparatuses UE.

When performing communication between user apparatuses UE, it is necessary that a user apparatus UE discovers another neighboring user apparatus UE. As a method for discovering a user apparatus UE, there is a method in which each user apparatus UE transmits (broadcasts) a discovery signal including its own ID (identification information).

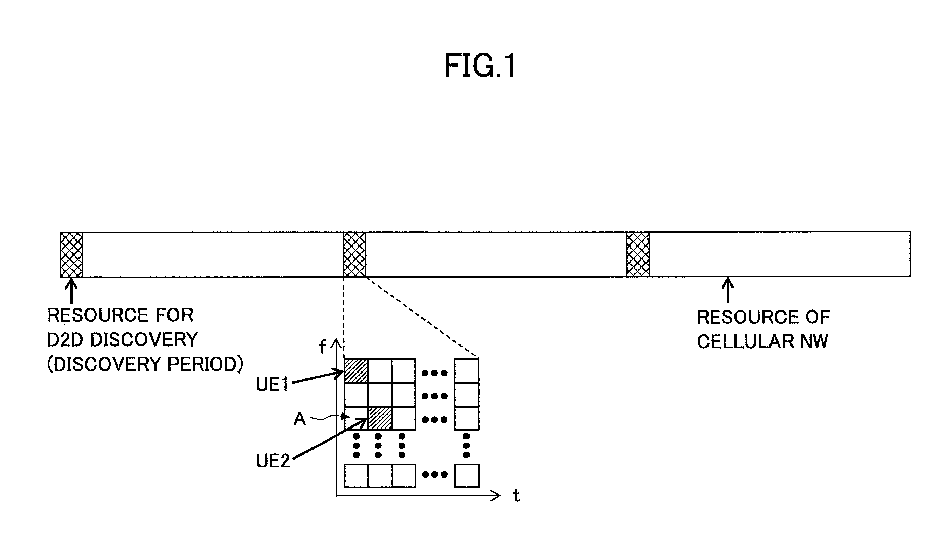

Fig. 1 is a diagram showing an example of a resource for transmitting a discovery signal. In the example of Fig. 1, it is defined that a discovery period, for performing discovery (and being discovered) of a user apparatus UE by transmitting and receiving a discovery signal, comes periodically. In each discovery period, a predetermined number of resources (each being a time-frequency resource, which is to be referred to as "discovery resource") for transmitting (and receiving) a discovery signal are defined. Each user apparatus UE transmits a discovery signal by using a discovery resource in the discovery period.

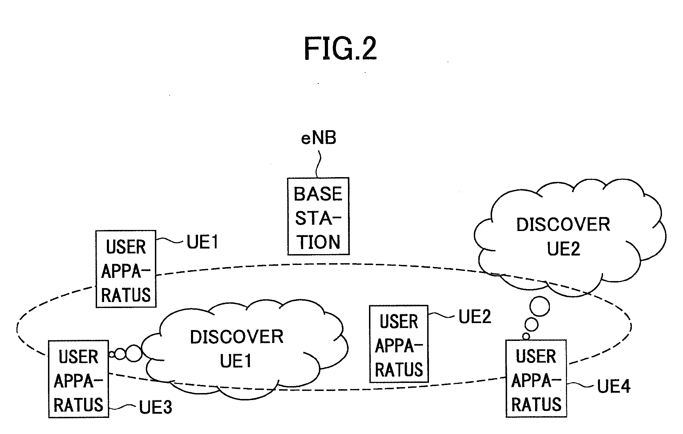

For example, a user apparatus UE1 of Fig. 2 transmits a discovery signal using a discovery resource indicated by UE1 of Fig. 1, a user apparatus UE2 of Fig. 2 transmits a discovery signal using a discovery resource indicated by UE2 of Fig. 1.

A user apparatus UE3 in Fig. 2 discovers the user apparatus UE1 by receiving a discovery signal transmitted by the user apparatus UE1, and a user apparatus UE4 discovers the user apparatus UE2 by receiving a discovery signal transmitted by the user apparatus UE2. There is a patent document 1 as a prior art document on terminal-to-terminal communication.

### RELATED ART DOCUMENT

### [PATENT DOCUMENT]

[PATENT DOCUMENT 1] JP2012-209893

### SUMMARY OF THE INVENTION

### PROBLEM TO BE SOLVED BY THE INVENTION

In the conventional technique of the D2D scheme in which the user apparatus UE transmits and receives a discovery signal, a predetermined radio resource in the mobile communication system is used as a radio resource used for transmitting and receiving a discovery signal such as the discovery period shown in Fig. 1.

There is a case in which a plurality of user apparatuses UE that perform terminal-to-terminal communication exist in a plurality of cells formed by different base stations eNB respectively. Even in such a case, when the base stations eNB are synchronized with each other and a predetermined radio resource arrives at the same time in all cells, the plurality of user apparatuses UE can transmit and receive a discovery signal using the radio resource. However, generally, a plurality of base stations eNB in the mobile communication system are not synchronized with each other.

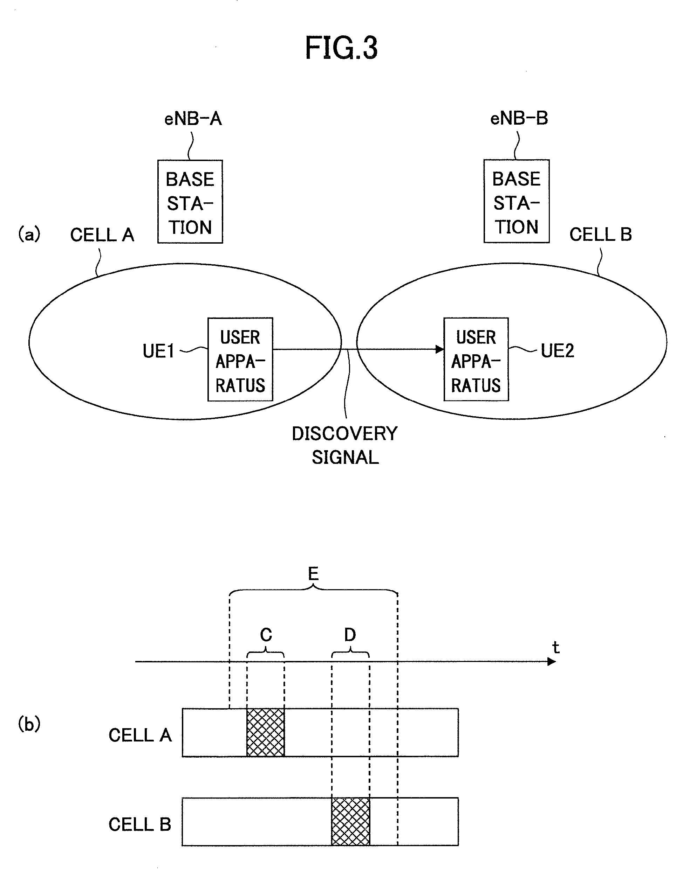

For example, as shown in Fig. 3(a), it is assumed that a user apparatus UE1 is located in a cell A formed by a base station eNB-A, a user apparatus UE2 is located in a cell B formed by a base station eNB-B, the user apparatus UE1 transmits a discovery signal to the user apparatus UE2, and that the user apparatus UE2 discovers the user apparatus UE1.

In this example, even if the same radio resource is determined as a discovery period between the base station eNB-A and the base station eNB-B, in a case where the base station eNB-A and the base station eNB-B are not synchronized with each other, a period C becomes a discovery period in cell A and a period D becomes a discovery period in cell B as shown in Fig. 3(b), for example.

Although the user apparatus UE1 in cell A transmits a discovery signal using a discovery resource in the period C, since the user apparatus UE2 in cell B performs operation of expecting a discovery signal in the period D, the user apparatus UE2 cannot detect the discovery signal transmitted from the user apparatus UE1.

For solving the problem, it can be considered that, when performing reception operation, the user apparatus UE2 performs operation for detecting a discovery signal in a period indicated as E of Fig. 3(b), for example, by assuming that there is a shift of synchronization between the base stations eNB.

However, when performing the above-mentioned operation, radio resources for receiving a signal from the base station eNB are reduced, and the user apparatus UE performs useless receiving operation for longer time. Thus, there is a problem in that power consumption increases.

The present invention is contrived in view of the above-mentioned points, and an object is, in a terminal-to-terminal communication technique in a mobile communication system, to provide a technique that enables a user apparatus to perform transmission and reception of a discovery signal efficiently even when base stations (cells) are asynchronized.

### MEANS FOR SOLVING THE PROBLEM

For solving the problem, according to an embodiment of the present invention, there is provided a user apparatus configured to select a discovery resource from a predetermined radio resource, and to transmit a discovery signal using the discovery resource, including:
means that receives, from a plurality of base stations, radio resource information indicating a radio resource by which a discovery signal can be transmitted;
means that detects a common region of radio resources by which a discovery signal can be transmitted between the plurality of base stations based on a plurality of pieces of radio resource information received from the plurality of base stations; and
means that selects a discovery resource from a radio resource of the common region, and transmits a discovery signal by using the discovery resource.

According to an embodiment of the present invention, there is provided a user apparatus configured to detect a discovery signal from a predetermined radio resource, including:
means that receives, from a plurality of base stations, radio resource information indicating a radio resource from which a discovery signal is to be detected;
means that detects a common region or a logical sum region of radio resources from which a discovery signal is to be detected between the plurality of base stations based on a plurality of pieces of radio resource information received from the plurality of base stations; and
means that detects a discovery signal from a radio resource of the common region or the logical sum region.

According to an embodiment of the present invention, there is provided a base station configured to communicate with a user apparatus that selects a discovery resource from a predetermined radio resource, and transmits a discovery signal using the discovery resource, including:
means that determines a radio resource by which a discovery signal can be transmitted in a cell formed by the base station;
means that receives, from another base station, information indicating a radio resource by which a discovery signal can be transmitted in a cell formed by the other base station;
means that detects a common region between the radio resource by which a discovery signal can be transmitted in the cell formed by the base station and the radio resource by which a discovery signal can be transmitted in the cell formed by the other base station; and
means that transmits the information indicating a radio resource of the common region to the user apparatus.

According to an embodiment of the present invention, there is provided a base station configured to communicate with a user apparatus that detects a discovery signal from a predetermined radio resource, including:
means that determines a radio resource from which a discovery signal is to be detected in a cell formed by the base station;
means that receives, from another base station, information indicating a radio resource from which a discovery signal is to be detected in a cell formed by the other base station;
means that detects a common region or a logical sum region between the radio resource from which a discovery signal is to be detected in the cell formed by the base station and the radio resource from which a discovery signal is to be detected in the cell formed by the other base station; and
means that transmits the information indicating a radio resource of the common region or the logical sum region to the user apparatus.

### EFFECT OF THE PRESENT INVENTION

According to an embodiment of the present invention, it becomes possible, in a terminal-to-terminal communication technique in a mobile communication system, that a user apparatus performs transmission and reception of a discovery signal efficiently by suppressing useless operation for detecting a discovery signal even when base stations (cells) are asynchronized.

### BRIEF DESCRIPTION OF THE DRAWINGS

Fig. 1 is a diagram showing an example of a resource for transmitting a discovery signal;
Fig. 2 is a diagram for explaining D2D communication;
Fig. 3 is a diagram for explaining a problem;
Fig. 4 is a diagram showing a configuration example of a communication system in an embodiment of the present invention;
Fig. 5 is a diagram for explaining process outline in an embodiment of the present invention;
Fig. 6 is a diagram for explaining process outline in a first embodiment of the present invention;
Fig. 7 is a diagram showing an example of determining a region of subframes for MBSFN as a radio resource by which a discovery signal can be transmitted;
Fig. 8 is a diagram for explaining a process example for determining a common region;
Fig. 9 is a diagram for explaining a process example for determining a common region;
Fig. 10 is a diagram showing an example for assigning a time-frequency resource as a radio resource by which discovery signal transmission is available;
Fig. 11 is a diagram showing an outline of a modified example;
Fig. 12 is a diagram for explaining a process example for determining a common region in the modified example;
Fig. 13 is a functional block diagram of a user apparatus UE in the first embodiment of the present invention;
Fig. 14 is a functional block diagram of a base station eNB in the first embodiment of the present invention;
Fig. 15 is a diagram for explaining process outline in a second embodiment of the present invention;
Fig. 16 is a diagram showing an example of determining a region of subframes for MBSFN as a radio resource for detecting a discovery signal;
Fig. 17 is a diagram for explaining a process example for determining a common region;
Fig. 18 is a functional block diagram of a user apparatus UE in the second embodiment of the present invention;
Fig. 19 is a functional block diagram of a base station eNB in the second embodiment of the present invention.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below.

### (First embodiment: NW reports radio resource for discovery signal transmission to UE)

### <Basic example>

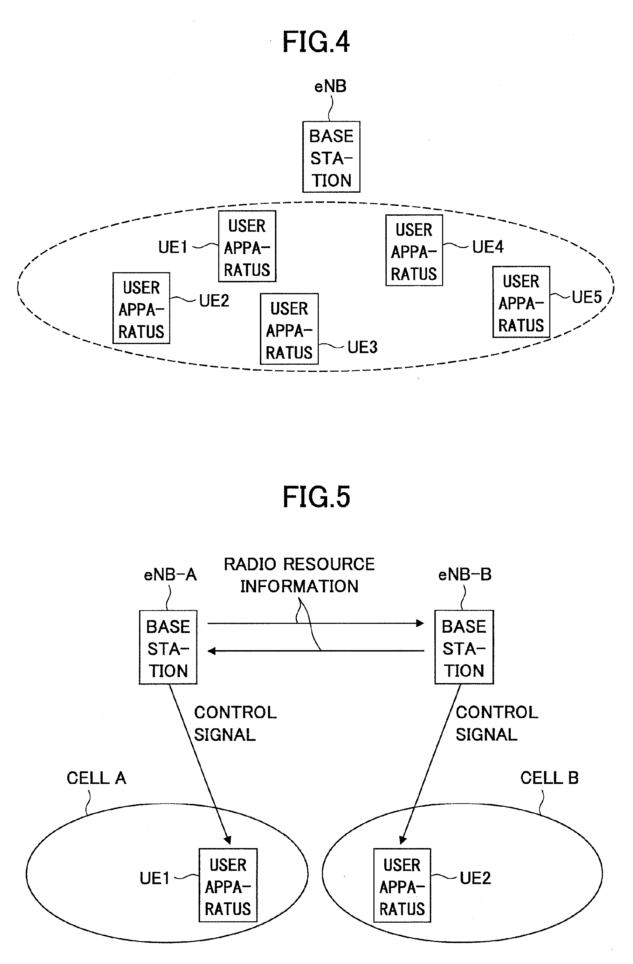

Fig. 4 is a diagram showing a configuration example of a communication system in the present embodiment. As shown in Fig. 4, the communication system of the present embodiment is a cellular communication system in which a plurality of user apparatuses UE exist under the base station eNB. In the present embodiment, although the cellular communication system is assumed to comply with LTE, the scheme of the communication system to which the present invention applies is not limited to LTE, and the present invention can be applied to various communication systems irrespective of schemes of the communication systems.

Although Fig. 4 shows one base station eNB and the cell, one or a plurality of other base stations eNB, not shown in the figure, exist, and also, a user apparatus UE existing in a cell of a base station eNB transmits and receives a discovery signal to/from not only a user apparatus UE in the cell but also a user apparatus UE existing in a neighboring cell.

In the specification and claims, "LTE" is used as having meaning that includes not only communication schemes corresponding to release 8 or 9 of 3GPP but also communication schemes corresponding to release 10, 11, 12 or later of 3GPP. In the following, process content of the present embodiment is described.

In the present embodiment, basically, the base station eNB transmits information, using a control signal, indicating a position of a radio resource by which a discovery signal can be transmitted in the cell, and a user apparatus UE that receives the control signal selects a discovery resource in the radio resource indicated in the control signal, and transmits a discovery signal. The control signal including the information indicating a position of a radio resource by which a discovery signal can be transmitted may be transmitted by RRC signaling, may be transmitted as broadcast information such as SIB, may be transmitted by dynamic signaling such as (E)PDCCH, for example. Also, it may be transmitted by signaling other than these.

In the present embodiment, although a position of a radio resource by which a discovery signal can be transmitted is designated, it is also possible to designate a position of a radio resource by which a discovery signal cannot be transmitted (cause the user apparatus UE not to transmit a discovery signal). The radio resource by which transmission is unavailable may be a radio resource other than a radio resource by which transmission is determined to be available in the present embodiment, for example. That is, a part of 0 in the after-mentioned bitmap information may be interpreted as a radio resource by which transmission is unavailable.

As information indicating positions of radio resources by which a discovery signal can be transmitted, bitmap information to which 0 or 1 is assigned for each of positions of a predetermined unit of radio resource can be used.

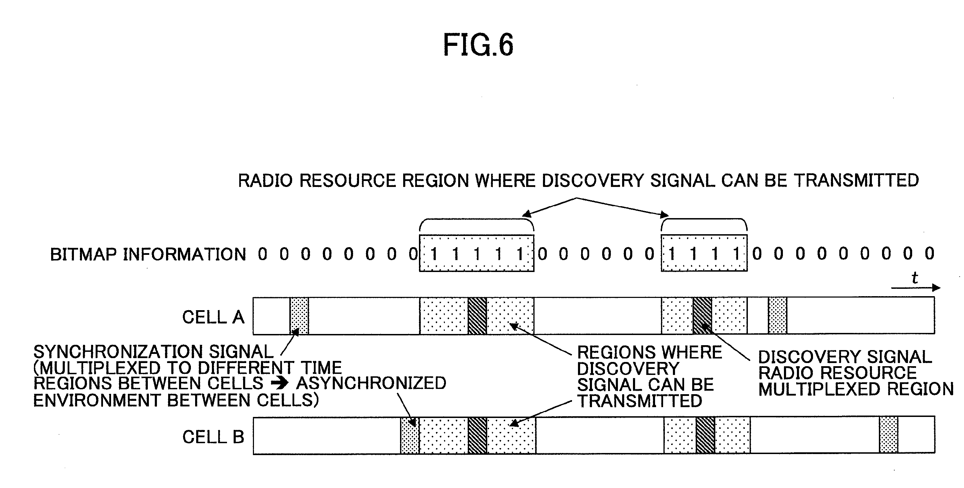

An example in a case where bitmap information is used is described with reference to Fig. 5 and Fig. 6. As shown in Fig. 5, in this example, a user apparatus UE1 located in a base station eNB-A (cell A) receives, from the base station eNB-A, a control signal indicating a position of a radio resource by which a discovery signal can be transmitted, and a user apparatus UE2 located in a base station eNB-B (cell B) receives, from the base station eNB-B, a control signal indicating a position of a radio resource by which a discovery signal can be transmitted, so that each of the user apparatuses selects a discovery resource from the radio resource that is indicated by respective control signal to be transmission possible, and transmits a discovery signal.

Also, in this example, the base station eNB-A and the base station eNB-B adjacent to it are connected by an X2 interface, for example, and communication is available between them. Thus, the base station eNB-A transmits, to the base station eNB-B, information of a position of a radio resource by which transmission of a discovery signal is determined to be available in the base station eNB-A, and the base station eNB-B transmits, to the base station eNB-A, information of a position of a radio resource by which transmission of a discovery signal is determined to be available in the base station eNB-B. Then, each of the base station eNB-A and the base station eNB-B detects a common region (that is, AND region) where the position of the radio resource by which transmission of a discovery signal is determined to be available in the base station eNB-A and the position of the radio resource by which transmission of a discovery signal is determined to be available in the base station eNB-B overlap, and transmits a position of a radio resource of the common region to the user apparatus UE1, UE2.

Fig. 6 shows an example of bitmap information included in the control signal transmitted from the base station eNB-A (base station eNB-B) to the user apparatus UE1 (UE2). In this example, the base station eNB-A (base station eNB-B) transmits, to the user apparatus UE1 (UE2), bitmap information in which 1 is assigned to a subframe by which a discovery signal can be transmitted and 0 is assigned to a subframe by which a discovery signal cannot be transmitted.

As shown in Fig. 6, the time position of the synchronization signal is different between the cell A and the cell B, so the base station eNB-A and the base station eNB-B are asynchronous. However, as mentioned above, the base station eNB-A and the base station eNB-B exchange information of radio resource positions by which discovery signal transmission is available, and reports information of AND of the information to user apparatuses UE. Thus, as shown in Fig. 6, a position of a radio resource by which discovery signal transmission is available is reported as the same time region between the cell A and the cell B.

It is merely an example to represent a position of a radio resource by bitmap, and the position of the radio resource may be represented by other methods.

### <Determination method of radio resource by which discovery signal transmission is available>

In the following, a method example is explained for the base station eNB to determine the radio resource by which discovery signal transmission is available.

(Example 1) The base station eNB determines a radio resource by which discovery signal transmission is available to be a region of radio resource that does not cause interference with cell operation in normal communication other than D2D communication.

As a region of a radio resource that does not cause interference with cell operation, the base station eNB selects a region of a radio resource to which none of the synchronization signal (SS: Synchronization signal) and the broadcast channel (PBCH: Physical broadcast channel) is mapped. The synchronization signal (SS) is a signal for a user apparatus UE to perform cell search for searching a cell of a connection destination. Also, the broadcast channel (PBCH) includes minimum basic information that the user apparatus UE should read first. Since these pieces of information are information necessary for the user apparatus UE to receive various control signals by connecting to the base station eNB and to perform data communication, the base station eNB determines a radio resource other than, at least, radio resources for transmitting these signal/channel to be a radio resource by which the user apparatus UE can transmit a discovery signal.

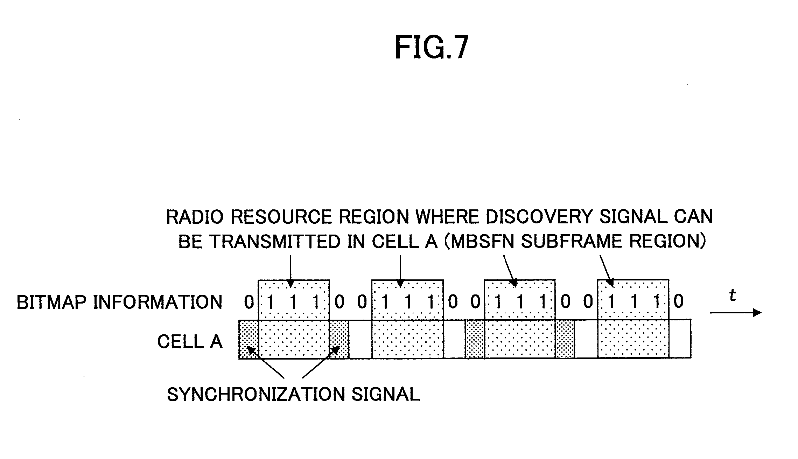

(Example 2) The base station eNB may determine a region of a subframe for MBSFN to be a radio resource by which discovery signal transmission is available. Fig. 7 shows a frame configuration in a case where a region of subframes for MBSFN is determined to be a radio resource by which discovery signal transmission is available. As shown in Fig. 7, the subframes for MBSFN are formed by subframes other than subframes 0, 4, 5 and 9 in subframes 0-9. Subframes 0 and 5 are used for transmission of the synchronization signal and the broadcast channel, and subframes 0, 4, 5 and 9 are used for paging. Thus, the subframes for MBSFN are formed by subframes other than subframes 0, 4, 5 and 9.

In this example, subframes for MBSFN may be configured by SIB and the like to a user apparatus UE that does not have D2D functions. In this case, the user apparatus UE without the D2D functions recognizes that the user apparatus UE does not receive data addressed to itself in the subframes for MBSFN. Thus, it becomes possible to cause the user apparatus UE not to perform useless demodulation/decoding operation even when receiving a discovery signal. In each subframe for MBSFN, a reference signal and a layer1/layer 2 control channel are placed only in two symbols, at the maximum, at the head of the subframe. Thus, even though subframes for MBSFN are configured, it is possible to perform control such as quality measurement for normal communication and uplink channel assignment. Accordingly, in this example, by determining the subframes for MBSFN to be a radio resource by which discovery signal transmission is available, and by configuring subframes for MBSFN to a user apparatus UE that does not have the D2D functions, the user apparatus UE that does not have the D2D functions does not need to consider the discovery signal that is transmitted and received in a period of the subframes for MBSFN, so that backward compatibility can be realized.

(Example 3) The base station eNB may determine a region of a radio resource in which interference amount from signals other than discovery signals is low in the user apparatus UE to be a radio resource by which discovery signal transmission is available.

A main interference from a signal other than the discovery signal is interference by a signal from another cell, for example. In this example, the base station eNB receives, via the X2 interface, information on interference for each radio resource of a predetermined unit (example: for each resource block) from an adjacent base station eNB, and based on the information, the base station eNB selects a radio resource where interference is small (radio resource where an interference amount is smaller than a predetermined value), and determines it as the radio resource by which discovery signal transmission is available. As the information on interference, there are RNTP(Relative narrowband Tx Power), HII(high interference indication) and the like defined in LTE, for example.

RNTP is information indicating whether transmission power is large or not for each resource block in downlink resource blocks assigned in the neighbor cell. Accordingly, the base station eNB can know a resource block where there is a possibility of transmission with large power in the neighbor cell, that is, a resource block that causes interference. HII is information of an uplink resource block that the adjacent base station assigns to a cell-edge user. Accordingly, the base station eNB can know a resource block that causes interference.

The above-mentioned RNTP and HII are merely examples, and information other than the above-mentioned information may be used as information on interference. For example, the base station eNB may obtain information on interference by estimating interference amount for each radio resource of the predetermined unit from signals received from adjacent base stations eNB and received from user apparatuses UE of adjacent cells.

As mentioned above, by selecting a radio resource where the interference amount is small, it becomes possible to increase detection probability between terminals in D2D.

As described above, although examples 1-3 are described as examples of methods for determining, by the base station eNB, a radio resource by which discovery signal transmission is available, the method for determining a radio resource by which discovery signal transmission is available is not limited to the examples 1-3.

Also, two or three of the examples 1-3 may be combined. For example, it is possible to determine, as the radio resource by which discovery signal transmission is available, subframes obtained by removing, from subframes for MBSFN in example 2, subframes that are determined not to be used for discovery signal transmission in the user apparatus UE by the determination of example 1. Also, in the radio resources determined in this way, only a radio resource where an interference amount is equal to or less than a predetermined value may be determined as a resource by which discovery signal transmission is available.

### <Adjustment between base stations eNB>

As described before, the base station eNB reports, to an adjacent base station eNB, determined information indicating a radio resource by which discovery signal transmission is available, and receives, from the adjacent base station eNB, information indicating a radio resource by which discovery signal transmission is available. The base station eNB reports, user apparatuses UE under the base station eNB, a part (common region) where these radio resources overlap.

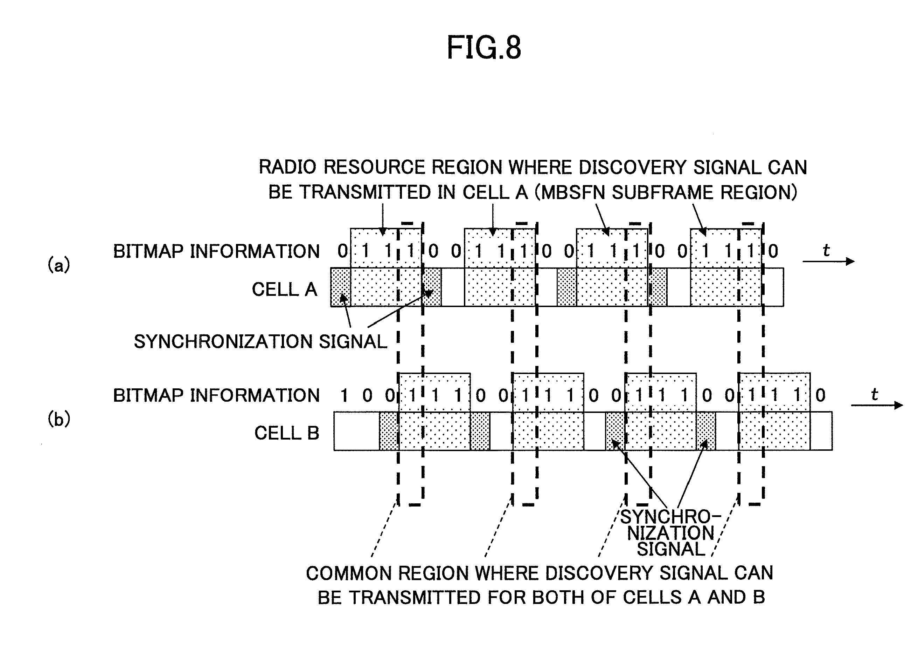

An operation example is described with reference to Fig. 8 focusing on the base station eNB-A in a case where there are the base station eNB-A and a base station eNB-B adjacent to the base station eNB-A.

In Fig. 8, based on the example 2, the base station eNB-A determines subframes (MBSFN subframes) indicated by 1 in the bitmap information shown in (a) to be radio resources by which a discovery signal can be transmitted. Also, the base station eNB-B determines subframes (MBSFN subframes) indicated by 1 in the bitmap information shown in (b) to be radio resources by which a discovery signal can be transmitted based on the example 2.

The base station eNB-A receives bitmap information shown as (b) from the base station eNB-B. Then, the base station eNB-A determines a region (AND region) common to both of radio resources by which discovery signal transmission is available in the base station eNB-A and the base station eNB-B, and reports information indicating a position of a radio resource corresponding to the region to the user apparatus UE by a control signal.

The time unit for performing information transfer from the base station eNB-B, common region determination in the base station eNB-A, and reporting to the user apparatus UE in the base station eNB-A is not limited to a particular unit. For example, it may be performed in units of subframes, in units of frames, and may be performed in time units other than these.

When it is performed in units of subframes, as shown in Fig. 8, 0 or 1 for the base station eNB-A and the base station eNB-B is checked for each subframe, and a subframe which becomes 1 and 1 is determined as a common region.

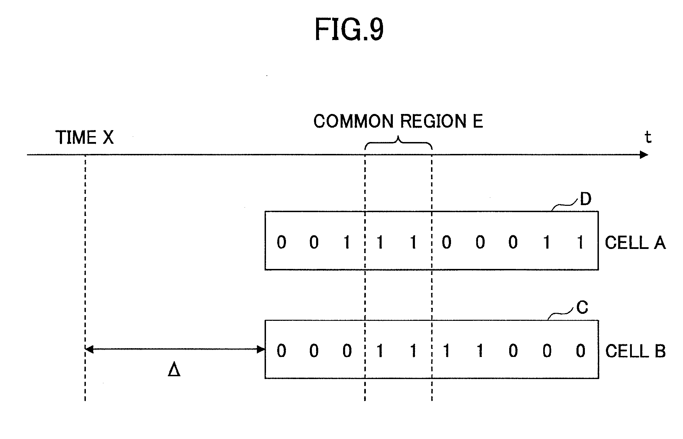

An example of control in larger time unit (example: in units of frames) is described with reference to Fig. 9. By the way, this example is merely an example. In this example, the base station eNB-A receives, beforehand (at time X), from the base station eNB-B, bitmap information C of a radio resource by which discovery signal transmission is available in cell B at a future period. The received information includes a time Δ from the current time point (time X) to a start of a frame corresponding to the bitmap information C. The base station eNB-A can ascertain a time position of the frame corresponding to the received bitmap information C by the Δ, so as to calculate AND between the bitmap information C and the bitmap information D of itself, and determine a region E common to these.

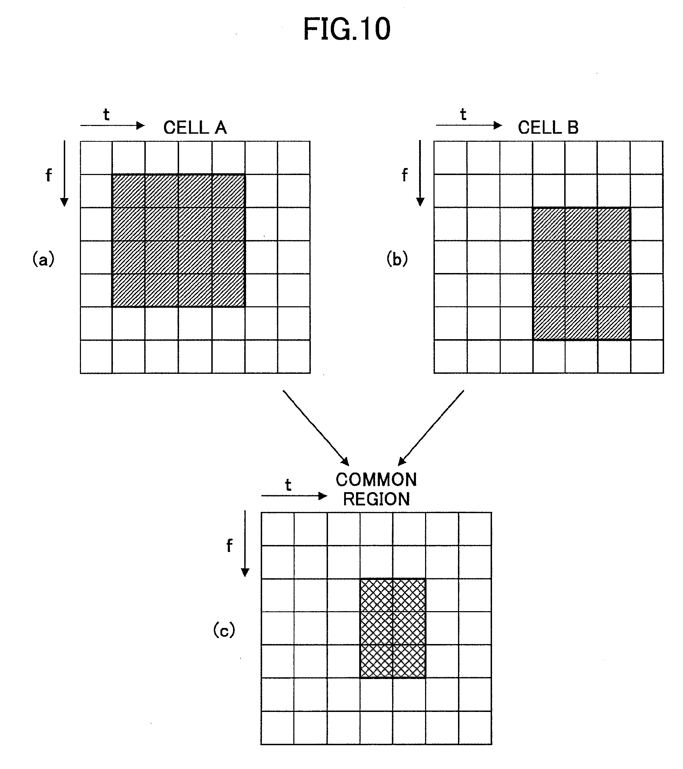

Although Fig. 8 and Fig. 9 show an example of determining a radio resource in time domain as the radio resource by which discovery signal transmission is available to be reported to the user apparatus UE, a time-frequency resource may be determined as the radio resource by which discovery signal transmission is available to be reported to the user apparatus UE. In this case, for example, the base station eNB-A determines the shaded region shown in Fig. 10(a) to be the radio resource by which discovery signal transmission is available, and the base station eNB-B determines the shaded region shown in Fig. 10(b) to be the radio resource by which discovery signal transmission is available. The base station eNB-A receives, from the base station eNB-B, bitmap information indicating a radio resource of the shaded region shown in Fig. 10(b), and calculates AND between the received bitmap information and the bitmap information of the radio resource of the shaded region shown in Fig. 10(a), and transmits bitmap information indicating a radio resource shown in Fig. 10(c) to the user apparatus UE.

### <Modified example>

In the above-mentioned example, information indicating a radio resource by which discovery signal transmission is available is exchanged between adjacent base stations eNB, each base station eNB determines a common region of radio resources by which discovery signal transmission is available between adjacent base stations eNB, and reports the common region to the user apparatus UE. Instead of this method, it is possible to use a method in which adjacent base stations eNB do not exchange information indicating a radio resource by which discovery signal transmission is available.

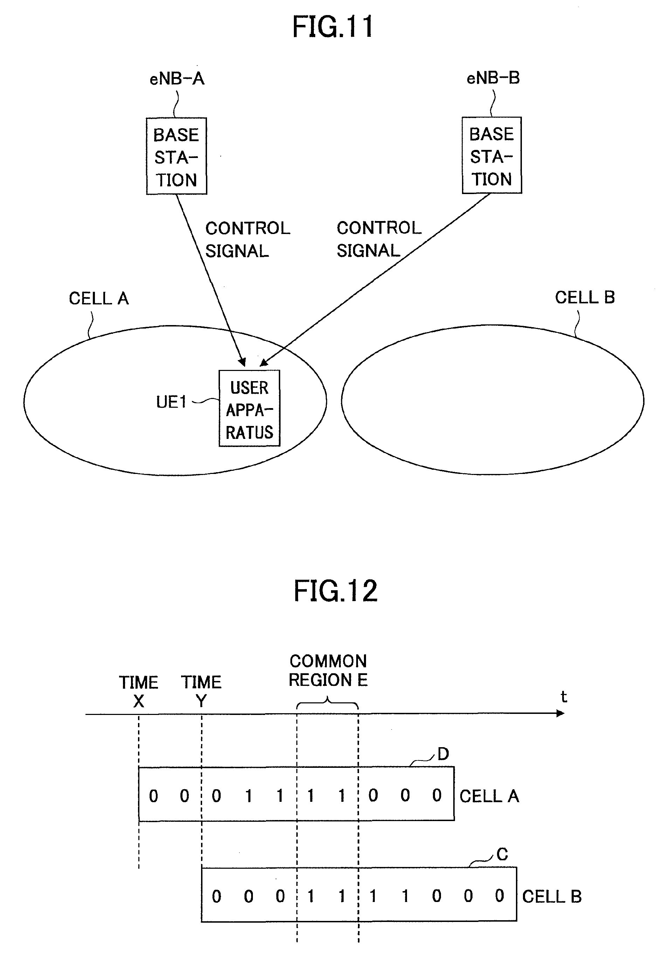

For example, as shown in Fig. 11, a user apparatus UE1 receives, from a plurality of base stations eNB (base stations eNB-A and eNB-B in the example of Fig. 11), information indicating a radio resource by which discovery signal transmission is available determined by respective single base station eNB, so that the user apparatus UE1 detects the common region, and transmits a discovery signal by using the common region.

A more concrete example is described with reference to before-mentioned Fig. 8. The base station eNB-A determines subframes indicated by 1 in the bitmap information shown in Fig.8(a) to be radio resources by which discovery signal transmission is available, and transmits a control signal indicating bitmap information indicating the radio resources. Also, the base station eNB-B determines subframes indicated by 1 in the bitmap information shown in Fig. 8(b) to be radio resources by which discovery signal transmission is available, and transmits a control signal indicating bitmap information indicating the radio resource. The user apparatus UE1 receives the control signal from each of the base station eNB-A and the base station eNB-B, obtains bitmap information in which information shown in Fig. 8(a), (b) is arranged, determines the common region to be the radio resource by which a discovery signal can be transmitted, and transmits a discovery signal by using a discovery resource selected from the common region.

When reception of the control signal and detection of the common region are performed in units of subframes, as shown in Fig. 8, 0 or 1 is checked for each subframe, and a subframe which becomes 1 and 1 is determined as the common region.

An example of control in large time unit (example: in units of frames) is described with reference to Fig. 12. In this example, the user apparatus UE receives, beforehand, from each of the base station eNB-A and the base station eNB-B, bitmap information of a radio resource by which discovery signal transmission is available at a future period (example: frame). The user apparatus UE1 receives, from each of the base station eNB-A and the base station eNB-B, a signal, such as a synchronization signal, which is a reference, so as to ascertain a start time of a frame corresponding to bitmap information D received from the base station eNB-A and a start time of a frame corresponding to bitmap information C received from the base station eNB-B. For example, in the example of Fig. 12, the user apparatus UE1 knows that the frame corresponding to bitmap information D received from the base station eNB-A starts from a time X, and the frame corresponding to bitmap information C received from the base station eNB-B starts from a time Y. Then, the user apparatus UE1 calculates AND between bits of bitmap information corresponding to the same time to detect a common region E.

### <Configuration of user apparatus UE>

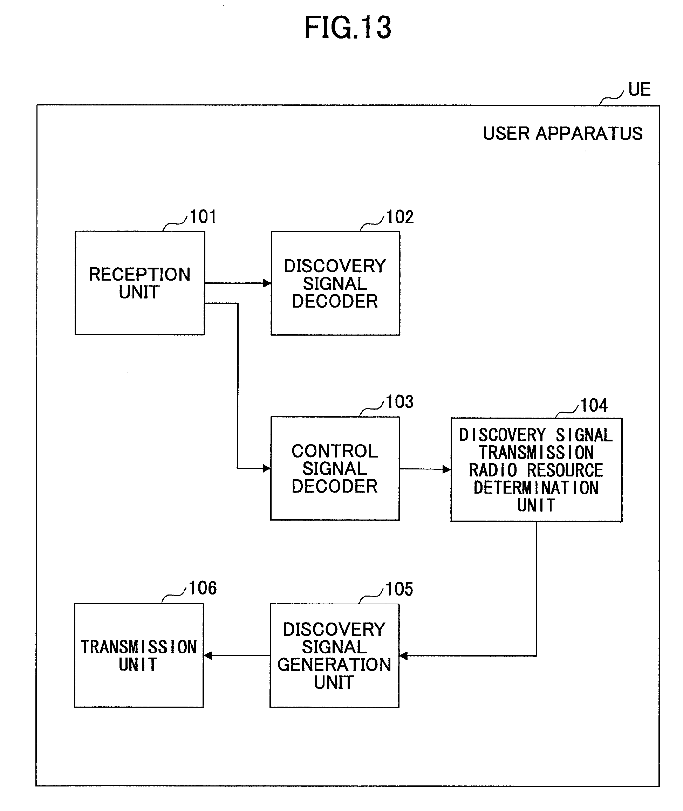

Fig. 13 shows a functional block diagram of the user apparatus UE in the present embodiment that executes processes described so far. Fig, 13 especially shows functions related to the present embodiment in the user apparatus UE. For example, the user apparatus UE may further include functions necessary for operating as a UE complying with LTE (including LTE-Advanced).

As shown in Fig. 13, the user apparatus UE includes a reception unit 101, a discovery signal decoder 102, a control signal decoder 103, a discovery signal transmission radio resource determination unit 104, a discovery signal generation unit 105 and a transmission unit 106.

The reception unit 101 receives a discovery signal, and a control signal from the base station eNB. The discovery signal decoder 102 performs processes such as demodulating and decoding a received discovery signal, extracting an ID of a user apparatus that transmits the discovery signal, and the like.

The control signal decoder 103 performs processes of demodulating and decoding a control signal received from the base station eNB, and obtaining bitmap information. The discovery signal transmission radio resource determination unit 104 determines a discovery signal transmission radio resource based on bitmap information received from the control signal decoder 103. As mentioned before, in the case of the example in which the base station eNB determines the common region, the discovery signal transmission radio resource determination unit 104 determines the region of 1 indicated by the bitmap information received from the control signal decoder 103 to be a radio resource for transmitting a discovery signal. In the case of the modified example, the discovery signal transmission radio resource determination unit 104 receives, from the control signal decoder 103, bitmap information received from the connecting base station eNB, and bitmap information received from one or a plurality of adjacent base stations eNB, detects a common region from these as mentioned before, and determines the common region as the radio resource for discovery signal transmission.

The discovery signal generation unit 105 performs discovery signal generation in a discovery resource selected from the radio resource determined by the discovery signal transmission radio resource determination unit 104, and transmits a discovery signal from the transmission unit 106. The transmission unit 106 transmits the discovery signal generated by the discovery signal generation unit 105.

The functional sections shown in Fig. 13 are merely examples. For example, the user apparatus UE may be configured as a user apparatus configured to select a discovery resource from a predetermined radio resource, and to transmit a discovery signal using the discovery resource, including: means that receives, from a plurality of base stations, radio resource information indicating a radio resource by which a discovery signal can be transmitted; means that detects a common region of radio resources by which a discovery signal can be transmitted between the plurality of base stations based on a plurality of pieces of radio resource information received from the plurality of base stations; and means that selects a discovery resource from a radio resource of the common region, and transmits a discovery signal by using the discovery resource.

### <Configuration of base station eNB>

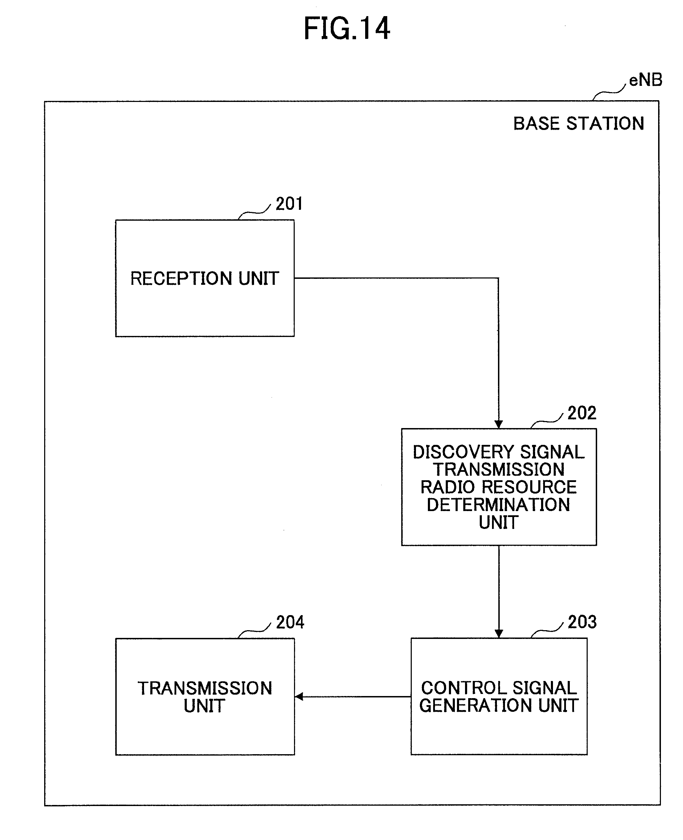

Fig. 14 shows a functional block diagram of the base station eNB in the present embodiment that executes processes described so far. Fig. 14 especially shows functions related to the present embodiment in the base station eNB. For example, the base station eNB may further include functions necessary for operating as an eNB complying with LTE (including LTE-Advanced).

As shown in Fig. 14, the base station eNB includes a reception unit 201, a discovery signal transmission radio resource determination unit 202, a control signal generation unit 203, and a transmission unit 204.

In a case where operation described in the before-mentioned example 3 is performed, the reception unit 201 receives information on interference for each radio resource from an adjacent base station eNB, and passes the information to the discovery signal transmission radio resource determination unit 202. Also, the reception unit 201 receives, from one or a plurality of adjacent base stations eNB, bitmap information indicating a radio resource for discovery signal transmission determined independently by the adjacent base station eNB, and passes the information to the discovery signal transmission radio resource determination unit 202. In the modified example, it is not necessary to perform the operation of receiving, from the adjacent base station eNB, bitmap information indicating a radio resource for discovery signal transmission determined independently by the adjacent base station eNB.

The discovery signal transmission radio resource determination unit 202 determines a radio resource for discovery signal transmission by a method described in the examples 1-3, for example, and generates bitmap information indicating the radio resource. Also, the discovery signal transmission radio resource determination unit 202 detects a common region from the bitmap information and bitmap information received from the reception unit 201, and determines a radio resource indicated by the common region to be a radio resource for discovery signal transmission that should be notified to the user apparatus UE.

In the modified example, the discovery signal transmission radio resource determination unit 202 determines a radio resource for discovery signal transmission by a method described in the before-mentioned examples 1-3, for example, generates bitmap information indicating the radio resource, and determines the bitmap information to be a radio resource for discovery signal transmission to be reported to the user apparatus UE.

The control signal generation unit 203 generates a control signal including bitmap information indicating the radio resource for discovery signal transmission determined by the discovery signal transmission radio resource determination unit 202, and transmits the control signal by the transmission unit 204. The transmission unit 205 performs transmission of a control signal. The transmission unit 205 also performs processes of transmitting interference information to an adjacent base station eNB, and transmitting, to an adjacent base station eNB, information indicating a radio resource for discovery signal transmission independently determined by the discovery signal transmission radio resource determination unit 202.

The functional sections shown in Fig. 14 are merely examples. For example, the base station eNB may be configured as a base station configured to communicate with a user apparatus that selects a discovery resource from a predetermined radio resource, and transmits a discovery signal using the discovery resource, including: means that determines a radio resource by which a discovery signal can be transmitted in a cell formed by the base station; means that receives, from another base station, information indicating a radio resource by which a discovery signal can be transmitted in a cell formed by the other base station; means that detects a common region between the radio resource by which a discovery signal can be transmitted in the cell formed by the base station and the radio resource by which a discovery signal can be transmitted in the cell formed by the other base station; and means that transmits the information indicating a radio resource of the common region to the user apparatus.

In the first embodiment, an embodiment has been described in which a radio resource for discovery signal transmission is reported from the base station eNB to the user apparatus UE. In the present embodiment, the user apparatus UE may use the resource, reported from the base station as a radio resource for discovery signal transmission, as a radio resource for detecting a discovery signal, and also, the user apparatus UE may use a resource determined separately as a resource for detecting a discovery signal.

### (Second embodiment: radio resource for discovery signal detection is reported from NW to UE)

### <Basic example>

In the present embodiment, in the similar way as the method explained in the first embodiment, the base station eNB reports, to the user apparatus UE, a radio resource from which the user apparatus UE is caused to detect (receive) a discovery signal.

A configuration example of the communication system of this embodiment is the same as that in the first embodiment, and is shown in Fig. 4.

In the present embodiment, basically, the base station eNB transmits information, using a control signal, indicating a position of a radio resource from which the user apparatus UE is caused to detect a discovery signal, and a user apparatus UE that receives the control signal performs operation for detecting a discovery signal in the radio resource indicated in the control signal.

In the present embodiment, although a position of a radio resource from which the user apparatus UE detects a discovery signal is designated, it is also possible to designate a position of a radio resource from which the user apparatus UE is inhibited to detect a discovery signal. The radio resource in which detection is inhibited may be a radio resource other than a radio resource determined to be a radio resource in which detection is performed, for example. That is, a part of 0 in the after-mentioned bitmap information may be interpreted as a radio resource in which detection is inhibited.

The control signal including a position of a radio resource for detecting a discovery signal may be transmitted by RRC signaling, may be transmitted as broadcast information such as SIB, may be transmitted by dynamic signaling such as (E)PDCCH, for example. Also, it may be transmitted by signaling other than these.

As information indicating positions of radio resources from which the user apparatus UE is caused to detect a discovery signal, like the first embodiment, bitmap information to which 0 or 1 is assigned for each of positions of a predetermined unit of radio resource can be used.

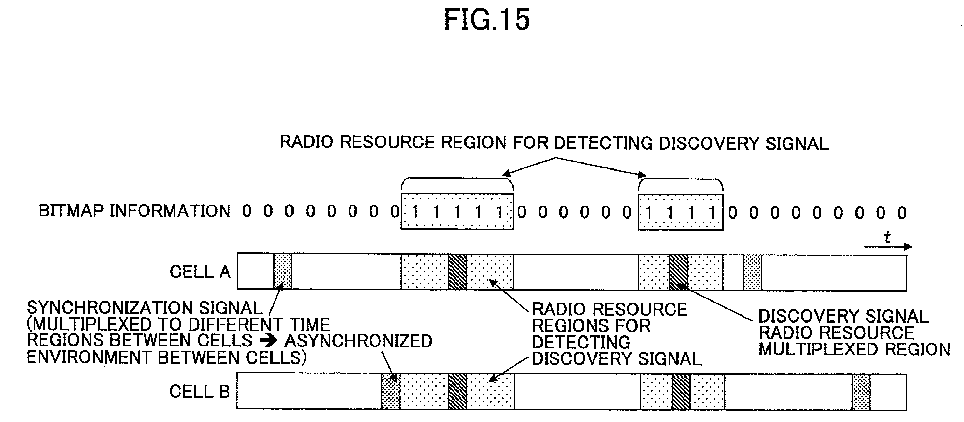

An example in a case where bitmap information is used is described with reference to Fig. 5 and Fig. 15. As shown in Fig. 5, in this example, a user apparatus UE1 located in a base station eNB-A (cell A) receives, from the base station eNB-A, a control signal indicating a position of a radio resource for detecting a discovery signal, and a user apparatus UE2 located in a base station eNB-B (cell B) receives, from the base station eNB-B, a control signal indicating a position of a radio resource for detecting a discovery signal, so that each of the user apparatuses performs detection of a discovery signal in the radio resource designated by respective control signal.

Also, in this example, like the first embodiment, the base station eNB-A and the base station eNB-B adjacent to it are connected by an X2 interface, for example, and communication is available between them. Thus, the base station eNB-A transmits, to the base station eNB-B, information of a position of a radio resource determined to be a radio resource for detecting a discovery signal in the base station eNB-A, and the base station eNB-B transmits, to the base station eNB-A, information of a position of a radio resource determined to be a radio resource for detecting a discovery signal in the base station eNB-B. Then, each of the base station eNB-A and the base station eNB-B detects a common region (that is, AND region) where the position of the radio resource determined to be a radio resource for detecting a discovery signal in the base station eNB-A and the position of the radio resource determined to be a radio resource for detecting a discovery signal in the base station eNB-B overlap, and transmits a position of a radio resource of the common region to the user apparatus UE1, UE2 as a control signal. As described later, in the present embodiment, instead of the common region, an OR(logical sum) region may be determined as a radio resource from which the user apparatus UE is caused to detect a discovery signal.

Fig. 15 shows an example of bitmap information included in the control signal transmitted from the base station eNB-A (base station eNB-B) to the user apparatus UE1 (UE2). In this example, the base station eNB-A (base station eNB-B) transmits, to the user apparatus UE1 (UE2), bitmap information in which 1 is assigned to a subframe for detecting a discovery signal and 0 is assigned to a subframe in which detection is inhibited.

As shown in Fig. 15, the time position of the synchronization signal is different between the cell A and the cell B, so the base station eNB-A and the base station eNB-B are asynchronous. However, as mentioned above, the base station eNB-A and the base station eNB-B exchange information of radio resource positions for detecting a discovery signal, and reports information of AND (or OR) of the information to user apparatuses UE. Thus, as shown in Fig. 15, a position of a radio resource for detecting a discovery signal is reported as the same time region between the cell A and the cell B.

It is merely an example to represent a position of a radio resource by bitmap, and the position of the radio resource may be represented by other methods.

### <Method for determining radio resource from which user apparatus UE is caused to detect discovery signal>

In the present embodiment, examples of a method for determining, by the base station eNB, a radio resource from which the user apparatus UE is caused to detect a discovery signal are the same as the examples 1-3 in the first embodiment. That is, a radio resource determined by any of the examples 1-3 can be used as a radio resource from which the user apparatus UE is caused to detect a discovery signal.

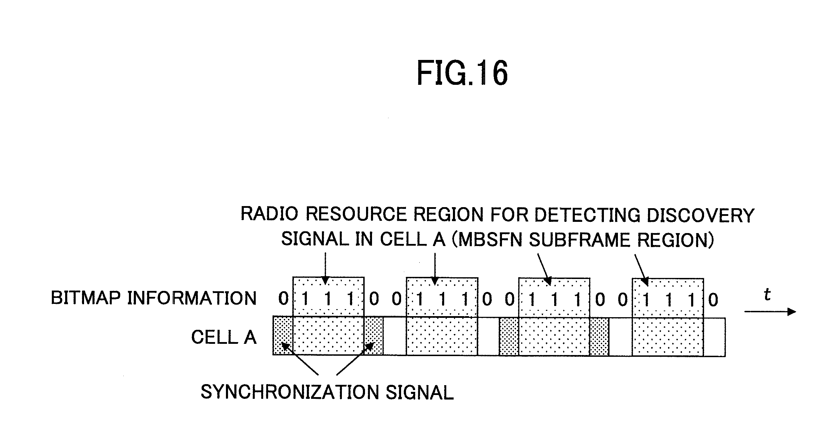

Fig. 16 shows the example 2 in the present embodiment. As shown in Fig. 16, the region of subframes for MBSFN in the cell A is determined to be a radio resource from which the user apparatus UE is caused to detect a discovery signal.

Although examples 1-3 are described as examples of methods for determining, by the base station eNB, a radio resource from which the user apparatus UE is caused to detect a discovery signal, the method for determining a radio resource from which the user apparatus UE is caused to detect a discovery signal is not limited to the examples 1-3.

Also, two or three of the examples 1-3 may be combined. For example, it is possible to determine, as the radio resource for discovery signal detection, subframes obtained by removing, from subframes for MBSFN in example 2, subframes that are determined not to be used for discovery signal detection in the user apparatus UE by the determination of example 1. Also, in the radio resources determined in this way, only a radio resource where an interference amount is equal to or less than a predetermined value may be determined as a radio resource for discovery signal detection.

### <Adjustment between base stations eNB>

Like the first embodiment, the base station eNB reports, to an adjacent base station eNB, determined information indicating a radio resource for discovery signal detection, and receives, from the adjacent base station eNB, information indicating a radio resource for discovery signal detection. The base station eNB reports, user apparatuses UE under the base station eNB, a part (common region) where these radio resources overlap.

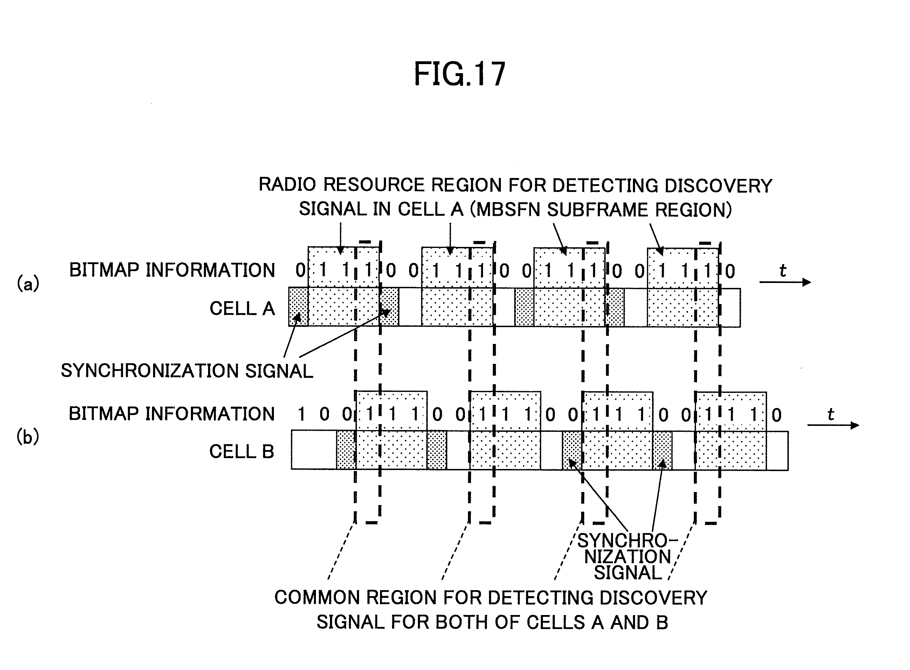

An operation example is described with reference to Fig. 17 focusing on the base station eNB-A in a case where there are the base station eNB-A and a base station eNB-B adjacent to the base station eNB-A.

In Fig. 17, based on the example 2, the base station eNB-A determines subframes (MBSFN subframes) indicated by 1 in the bitmap information shown in (a) to be radio resources for discovery signal detection. Also, the base station eNB-B determines subframes (MBSFN subframes) indicated by 1 in the bitmap information shown in (b) to be radio resources for discovery signal detection based on the example 2.

The base station eNB-A receives bitmap information shown as (b) from the base station eNB-B. Then, the base station eNB-A determines a region (AND region) common to both of radio resources for discovery signal detection in the base station eNB-A and the base station eNB-B, and reports information indicating a position of a radio resource corresponding to the region to the user apparatus UE.

In determination of a radio resource for discovery signal detection, OR (logical sum) between radio resources for discovery signal detection of the base station eNB-A and the base station eNB-B may be calculated, and a part of 1 may be determined as a radio resource for discovery signal detection to be reported to the user apparatus UE. For example, in a case where a radio resource for discovery signal detection that is independently determined by the base station eNB-A is 011100, and a radio resource for discovery signal detection determined by the base station eNB-A in the same time position is 001110, 011110 can be obtained by OR. By performing detection in a radio resource determined by calculating OR (logical sum), it becomes possible to perform detection of a discovery signal more reliably.

The time unit for performing information transfer from the base station eNB-B, common region determination (or OR determination) in the base station eNB-A, and reporting to the user apparatus UE in the base station eNB-A is not limited to a particular unit. For example, it may be performed in units of subframes, in units of frames, and may be performed in time units other than these.

When it is performed in units of subframes, as shown in Fig. 17, 0 or 1 for the base station eNB-A and the base station eNB-B is checked for each subframe, and a subframe which becomes 1 and 1 is determined as a common region. In a case where OR is calculated, a part where either one becomes 1 is determined as a resource for discovery signal detection.

An example of control in larger time unit (example: in units of frames) is the same as that described in the first embodiment with reference to Fig. 9. Also, like the first embodiment, the domain is not limited to the time domain, and a time-frequency resource may be determined as a radio resource for discovery signal detection.

### <Modified example>

In the above-mentioned example, information indicating a radio resource for discovery signal detection is exchanged between adjacent base stations eNB, each base station eNB determines a common region or an OR region of radio resources for discovery signal detection between adjacent base stations eNB, and reports the region to the user apparatus UE. Like the modified example in the first embodiment, it is possible to use a method in which adjacent base stations eNB do not exchange information indicating a radio resource for discovery signal detection.

For example, as shown in Fig. 11, a user apparatus UE1 receives, from a plurality of base stations eNB (base stations eNB-A and eNB-B in the example of Fig. 11), information indicating a radio resource for discovery signal detection determined by respective base station eNB, so that the user apparatus UE1 detects the common region or the OR region, and transmits a discovery signal by using the common region or the OR region.

A more concrete example is described with reference to before-mentioned Fig. 17. The base station eNB-A determines subframes indicated by 1 in the bitmap information shown in Fig.17(a) to be radio resources for discovery signal detection, and transmits a control signal indicating bitmap information indicating the radio resources. Also, the base station eNB-B determines subframes indicated by 1 in the bitmap information shown in Fig. 17(b) to be radio resources for discovery signal detection, and transmits a control signal indicating bitmap information indicating the radio resource. The user apparatus UE1 receives the control signal from each of the base station eNB-A and the base station eNB-B, obtains bitmap information in which information shown in Fig. 17(a), (b) is arranged, determines the common region to be the radio resource for discovery signal detection, and performs detection of a discovery signal by using a radio resource of the common region. As described before, an OR region may be used instead of the common region.

When reception of the control signal and detection of the common region are performed in units of subframes, as shown in Fig. 17, 0 or 1 is checked for each subframe, and a subframe which becomes 1 and 1 is determined as the common region. Alternatively, a subframe where either one is 1 is determined as an OR region.

An example of control in large time unit (example: in units of frames) is similar to that described with reference to Fig. 12 in the first embodiment.

### <Configuration of user apparatus UE>

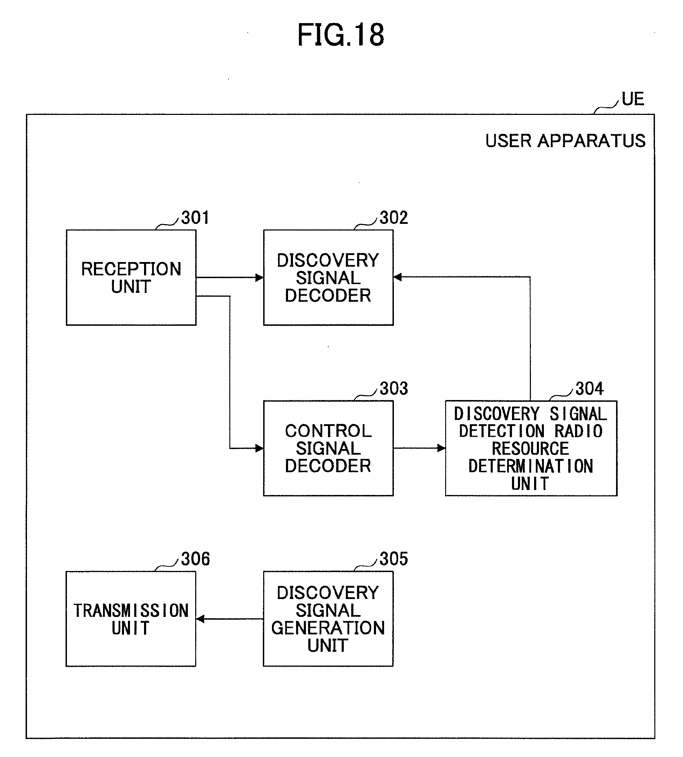

Fig. 18 shows a functional block diagram of the user apparatus UE in the present embodiment that executes processes described so far. Fig, 18 especially shows functions related to the present embodiment in the user apparatus UE. For example, the user apparatus UE may further include functions necessary for operating as a UE complying with LTE (including LTE-Advanced).

As shown in Fig. 18, the user apparatus UE includes a reception unit 301, a discovery signal decoder 302, a control signal decoder 303, a discovery signal detection radio resource determination unit 304, a discovery signal generation unit 305 and a transmission unit 306.

The reception unit 301 receives a discovery signal, and a control signal from the base station eNB. The discovery signal decoder 302 performs processes such as demodulating and decoding a discovery signal received at a radio resource for discovery signal detection determined by the discovery signal detection radio resource determination unit 304, extracting an ID of a user apparatus that transmits the discovery signal, and the like.

The control signal decoder 303 performs processes of demodulating and decoding a control signal received from the base station eNB, and obtaining bitmap information. The discovery signal detection radio resource determination unit 304 determines a discovery signal detection radio resource based on bitmap information received from the control signal decoder 303. As mentioned before, in the case of the example in which the base station eNB determines the common region or the OR region, the discovery signal detection radio resource determination unit 304 determines the region of 1 indicated by the bitmap information received from the control signal decoder 303 to be a radio resource for discovery signal detection. In the case of the modified example, the discovery signal detection radio resource determination unit 304 receives, from the control signal decoder 303, bitmap information received from the connecting base station eNB, and bitmap information received from one or a plurality of adjacent base stations eNB, detects a common region or an OR region from these as mentioned before, and determines the region as the radio resource for discovery signal detection.

The discovery signal generation unit 305 performs discovery signal generation, and transmits a discovery signal from the transmission unit 306. The transmission unit 306 transmits the discovery signal generated by the discovery signal generation unit 305.

The functional sections shown in Fig. 18 are merely examples. For example, the user apparatus UE may be configured as a user apparatus configured to detect a discovery signal from a predetermined radio resource, including: means that receives, from a plurality of base stations, radio resource information indicating a radio resource from which a discovery signal is to be detected; means that detects a common region or a logical sum region of radio resources from which a discovery signal is to be detected between the plurality of base stations based on a plurality of pieces of radio resource information received from the plurality of base stations; and means that detects a discovery signal from a radio resource of the common region or the logical sum region.

### <Configuration of base station eNB>

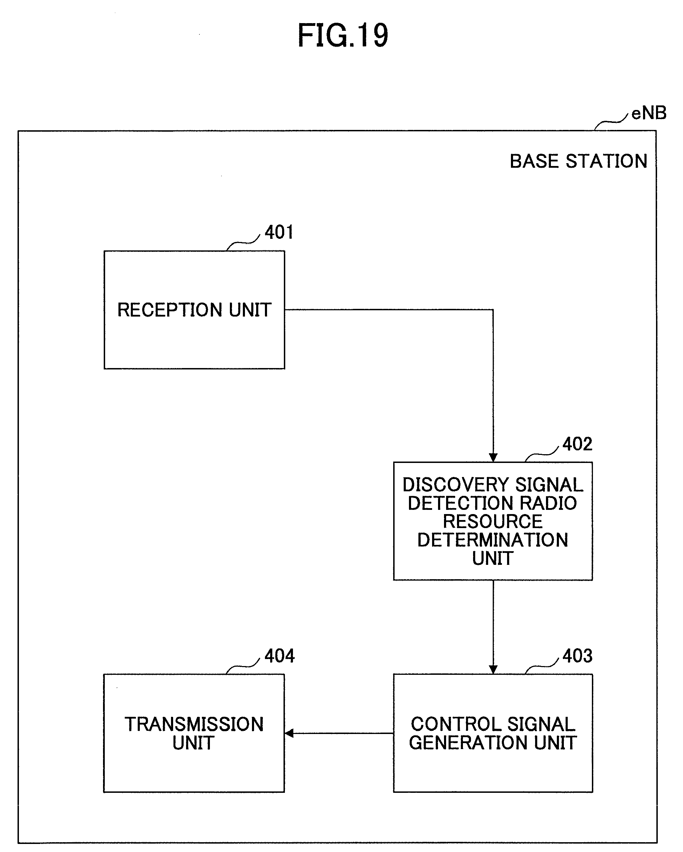

Fig. 19 shows a functional block diagram of the base station eNB in the present embodiment that executes processes described so far. Fig. 19 especially shows functions related to the present embodiment in the base station eNB. For example, the base station eNB may further include functions necessary for operating as an eNB complying with LTE (including LTE-Advanced).

As shown in Fig. 19, the base station eNB includes a reception unit 401, a discovery signal detection radio resource determination unit 402, a control signal generation unit 403, and a transmission unit 404.

In a case where operation described in the before-mentioned example 3 is performed, the reception unit 401 receives information on interference for each radio resource from an adjacent base station eNB, and passes the information to the discovery signal detection radio resource determination unit 402. Also, the reception unit 401 receives, from one or a plurality of adjacent base stations eNB, bitmap information indicating a radio resource for discovery signal detection determined independently by the adjacent base station eNB, and passes the information to the discovery signal detection radio resource determination unit 402. In the modified example, it is not necessary to perform the operation of receiving, from the adjacent base station eNB, bitmap information indicating a radio resource for discovery signal detection determined independently by the adjacent base station eNB.

The discovery signal determination radio resource determination unit 402 determines a radio resource for discovery signal detection by a method described in the examples 1-3, for example, and generates bitmap information indicating the radio resource. Also, the discovery signal detection radio resource determination unit 402 detects a common region or an OR region from the bitmap information and bitmap information received from the reception unit 401, and determines a radio resource indicated by the common region or the OR region to be a radio resource for discovery signal detection that should be notified to the user apparatus UE.

In the modified example, the discovery signal detection radio resource determination unit 402 determines a radio resource for discovery signal detection by a method described in the before-mentioned examples 1-3, for example, generates bitmap information indicating the radio resource, and determines the bitmap information to be a radio resource for discovery signal detection to be reported to the user apparatus UE.

The control signal generation unit 403 generates a control signal including bitmap information indicating the radio resource for discovery signal detection determined by the discovery signal detection radio resource determination unit 402, and transmits the control signal by the transmission unit 404. The transmission unit 405 performs transmission of a control signal. The transmission unit 405 also performs processes of transmitting interference information to an adjacent base station eNB, and transmitting, to an adjacent base station eNB, information indicating a radio resource for discovery signal detection independently determined by the discovery signal detection radio resource determination unit 402.

The functional sections shown in Fig. 19 are merely examples. For example, the base station eNB may be configured as a base station configured to communicate with a user apparatus that detects a discovery signal from a predetermined radio resource, including: means that determines a radio resource from which a discovery signal is to be detected in a cell formed by the base station; means that receives, from another base station, information indicating a radio resource from which a discovery signal is to be detected in a cell formed by the other base station; means that detects a common region or a logical sum region between the radio resource from which a discovery signal is to be detected in the cell formed by the base station and the radio resource from which a discovery signal is to be detected in the cell formed by the other base station; and means that transmits the information indicating a radio resource of the common region or the logical sum region to the user apparatus.

In the second embodiment, an embodiment has been described in which a radio resource for discovery signal detection is reported from the base station eNB to the user apparatus UE. In the present embodiment, the user apparatus UE may use the radio resource, reported from the base station eNB as a radio resource for discovery signal detection, as a radio resource for transmitting a discovery signal, and also, the user apparatus UE may use a radio resource determined separately as a radio resource for transmitting a discovery signal.

Also, each of the base station eNB and the user apparatus may include both of functions for performing processes in the first embodiment and functions for performing processes in the second embodiment.

In the above, each embodiment of the present invention has been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station eNB have been explained by using functional block diagrams. However, each apparatus may be implemented in hardware, software, or a combination thereof. The software that operates according to the present invention (software executed by a processor provided in the user apparatus UE, software executed by a processor provided in the base station eNB) may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present international application claims priority based on Japanese patent application No. 2013-106539, filed in the JPO on May 20, 2013, and the entire contents of the Japanese patent application No. 2013-106539 are incorporated herein by reference.

### DESCRIPTION OF REFERENCE SIGNS

UE user apparatus
eNB base station
101 reception unit
102 discovery signal decoder
103 control signal decoder
104 discovery signal transmission radio resource determination unit
105 discovery signal generation unit
106 transmission unit
201 reception unit
202 discovery signal transmission radio resource
determination unit
203 control signal generation unit
204 transmission unit
301 reception unit
302 discovery signal decoder
303 control signal decoder
304 discovery signal detection radio resource determination unit
305 discovery signal generation unit
306 transmission unit
401 reception unit
402 discovery signal detection radio resource determination unit
403 control signal generation unit
404 transmission unit

## Claims

1. A user apparatus configured to select a discovery resource from a predetermined radio resource, and to transmit a discovery signal using the discovery resource, comprising:
means that receives, from a plurality of base stations, radio resource information indicating a radio resource by which a discovery signal can be transmitted;
means that detects a common region of radio resources by which a discovery signal can be transmitted between the plurality of base stations based on a plurality of pieces of radio resource information received from the plurality of base stations; and
means that selects a discovery resource from a radio resource of the common region, and transmits a discovery signal by using the discovery resource.

2. A user apparatus configured to detect a discovery signal from a predetermined radio resource, comprising:
means that receives, from a plurality of base stations, radio resource information indicating a radio resource from which a discovery signal is to be detected;
means that detects a common region or a logical sum region of radio resources from which a discovery signal is to be detected between the plurality of base stations based on a plurality of pieces of radio resource information received from the plurality of base stations; and
means that detects a discovery signal from a radio resource of the common region or the logical sum region.

3. A base station configured to communicate with a user apparatus that selects a discovery resource from a predetermined radio resource, and transmits a discovery signal using the discovery resource, comprising:
means that determines a radio resource by which a discovery signal can be transmitted in a cell formed by the base station;
means that receives, from another base station, information indicating a radio resource by which a discovery signal can be transmitted in a cell formed by the other base station;
means that detects a common region between the radio resource by which a discovery signal can be transmitted in the cell formed by the base station and the radio resource by which a discovery signal can be transmitted in the cell formed by the other base station; and
means that transmits information indicating a radio resource of the common region to the user apparatus.

4. The base station as claimed in claim 3, wherein, as the radio resource by which a discovery signal can be transmitted in the cell formed by the base station, the base station selects a subframe for MBSFN in the cell.

5. A base station configured to communicate with a user apparatus that detects a discovery signal from a predetermined radio resource, comprising:
means that determines a radio resource from which a discovery signal is to be detected in a cell formed by the base station;
means that receives, from another base station, information indicating a radio resource from which a discovery signal is to be detected in a cell formed by the other base station;
means that detects a common region or a logical sum region between the radio resource from which a discovery signal is to be detected in the cell formed by the base station and the radio resource from which a discovery signal is to be detected in the cell formed by the other base station; and
means that transmits information indicating a radio resource of the common region or the logical sum region to the user apparatus.

6. The base station as claimed in claim 5, wherein, as the radio resource from which a discovery signal is to be detected in the cell formed by the base station, the base station selects a subframe for MBSFN in the cell.

7. A radio resource selection method executed by a user apparatus configured to select a discovery resource from a predetermined radio resource, and to transmit a discovery signal using the discovery resource, comprising:
a step of receiving, from a plurality of base stations, radio resource information indicating a radio resource by which a discovery signal can be transmitted;
a step of detecting a common region of radio resources by which a discovery signal can be transmitted between the plurality of base stations based on a plurality of pieces of radio resource information received from the plurality of base stations; and
a step of selecting a discovery resource from a radio resource of the common region, and transmitting a discovery signal by using the discovery resource.

8. A radio resource selection method executed by a user apparatus configured to detect a discovery signal from a predetermined radio resource, comprising:
a step of receiving, from a plurality of base stations, radio resource information indicating a radio resource from which a discovery signal is to be detected;
a step of detecting a common region or a logical sum region of radio resources from which a discovery signal is to be detected between the plurality of base stations based on a plurality of pieces of radio resource information received from the plurality of base stations; and
a step of detecting a discovery signal from a radio resource of the common region or the logical sum region.

9. A radio resource notification method executed by a base station configured to communicate with a user apparatus that selects a discovery resource from a predetermined radio resource, and transmits a discovery signal using the discovery resource, comprising:
a step of determining a radio resource by which a discovery signal can be transmitted in a cell formed by the base station;
a step of receiving, from another base station, information indicating a radio resource by which a discovery signal can be transmitted in a cell formed by the other base station;
a step of detecting a common region between the radio resource by which a discovery signal can be transmitted in the cell formed by the base station and the radio resource by which a discovery signal can be transmitted in the cell formed by the other base station; and
a step of transmitting information indicating a radio resource of the common region to the user apparatus.

10. A radio resource notification method executed by a base station configured to communicate with a user apparatus that detects a discovery signal from a predetermined radio resource, comprising:
a step of determining a radio resource from which a discovery signal is to be detected in a cell formed by the base station;
a step of receiving, from another base station, information indicating a radio resource from which a discovery signal is to be detected in a cell formed by the other base station;
a step of detecting a common region or a logical sum region between the radio resource from which a discovery signal is to be detected in the cell formed by the base station and the radio resource from which a discovery signal is to be detected in the cell formed by the other base station; and
a step of transmitting information indicating a radio resource of the common region or the logical sum region to the user apparatus.
